# EUROPÄISCHE PATENTSCHRIFT

(11) **EP 2 242 006 B1**
(45) Veröffentlichungstag und Bekanntmachung des Hinweises auf die Patenterteilung: **26.06.2013**
(21) Anmeldenummer: 10007364.2
(22) Anmeldetag: 22.02.2008
(51) Int. Cl.: G06K 19/077, G07C 9/00, H01Q 1/22

(54) **Tragbarer Datenträger**
Portable data carrier
Support de données portatif

(30) Priorität: 26.02.2007 DE 102007009213
(43) Veröffentlichungstag der Anmeldung: 20.10.2010
(62) Teilanmeldung aus: 08003257.6
(73) Patentinhaber: Giesecke & Devrient GmbH, 81677 München (DE)
(72) Erfinder: Baldischweiler, Michael, 81825 München (DE)

(56) Entgegenhaltungen:
- EP-A- 1 755 074
- DE-A1- 10 240 396
- DE-A1-102005 031 448
- DE-A1-102007 009 215
- US-A- 5 874 724
- US-A1- 2004 012 496
- US-A1- 2005 274 794
- US-B1- 6 501 390
- US-B1- 6 802 008

## Beschreibung

Die vorliegende Erfindung betrifft einen tragbaren Datenträger eingerichtet für den kontaktlosen Datenaustausch mit Hilfe eines elektromagnetischen Wechselfeldes.

Für kontaktlose tragbare Datenträger ist es ein häufig thematisiertes Problem, dass der Datenträger nicht ohne Zustimmung des Benutzers Daten mit einem entsprechenden Lesegerät austauschen sollte.

Als eine Lösung ist es beispielsweise aus US 2005/0274794 A1, WO 2006/107397 A2 und US 6,121,544 A bekannt, eine vor der Aufnahme einer kontaktlosen Kommunikation zu entfernende elektromagnetische Abschirmung für die kontaktlosen tragbaren Datenträger vorzusehen. Die Ansprüche sind gegen die US 2005/0274794 abgegerenzt.

Ein weiterer, beispielsweise in US-2003-0132301-A1 genannter, Lösungsansatz ist die Verwendung eines Schalters, welcher eine Benutzerinteraktion erfasst. Eine Transaktion mit Hilfe der kontaktlosen Datenübertragung wird dann beispielsweise erst durchgeführt, nachdem der Benutzer den Schalter betätigt hat.

Gemäß US 5,874,724 A1 oder US2004/0012496A1 erkennt ein Lichtsensor auf einem RFID-Tag eintreffendes Licht und gibt entsprechend eine kontaktlose Kommunikation frei, so dass die Freigabe beispielsweise nur erfolgt, wenn das RFID-Tag dem Tageslicht ausgesetzt ist oder mit Licht beaufschlagt wird.

Gemäß EP 1 755 074 A1 soll ein Datenträger zur Freigabe der kontaktlosen Kommunikation Identifikationsinformationen über seine optische Schnittstelle empfangen. In US 6,802,008 B1 wird ein Angriff auf einen Datenträger mit Hilfe eines Lichtsensors erkannt, um bei einem Angriff die normale Funktion der CPU des Datenträgers abzuschalten.

In US 2005/0274794 A1 wird teilweise auch ein solcher Lichtsensor verwendet. Um den Lichtsensor für eine Freigabe der Kommunikation zu beleuchten, muss das mehrseitige Ausweisdokument aufgeklappt werden. Dieses Dokument wurde als nächstliegender Stand der Technik bezeichnet.

Es ist die Aufgabe der vorliegenden Erfindung, eine alternative Lösung zur Verhinderung einer unerwünschten kontaktlosen Kommunikation bereitzustellen.

Diese Aufgabe wird gelöst durch den Gegenstand der unabhängigen Ansprüche. Bevorzugte Ausführungsformen sind durch die abhängigen Ansprüche angegeben.

Gemäß der vorliegenden Ausgestaltung wird ein Lichtsensor so mit einem Schalter kombiniert, dass der Zustand des Schalters beeinflusst, ob oder wieviel Licht auf den Lichtsensor trifft. Dieser Ansatz bietet eine zuverlässige Freigabemöglichkeit. Gegenüber einer denkbaren Lösung mit logischer UND-Verknüpfung zweier unabhängiger Signale von einem Lichtsensor und einem Schaltelement, ist die Auswertung vereinfacht.

In einer bevorzugten Ausgestaltung, die kostengünstig herzustellen ist, wird der Schalter durch eine thermochrome Schicht gebildet.

Mittel zur Aufrechterhaltung der Freigabe ermöglichen die kontaktlose Kommunikation für einen geeigneten Zeitraum, beispielsweise der maximalen zu erwartenden Transaktionszeit.

In weiteren Ausgestaltungen enthält der Lichtsensor ein lichtleitendes Element und ein lichtempfindliches Element. Das lichtleitende Element leitet das eintreffende Licht zum lichtempfindlichen Element, so dass eine relative Anordnung der Komponenten flexibel gestaltet werden kann.

Es ist besonders vorteilhaft, wenn der Lichtsensor durch ein photovoltaisches Element gebildet wird, da somit die Freigabe unabhängig bzw. zeitlich vor dem Vorliegen eines für die Kommunikation nötigen elektromagnetischen Wechselfelds erfolgen kann.

In bevorzugten Ausgestaltungen sind Mittel zur Anzeige eines Freigabezustandes für den Benutzer vorgesehen. Insbesondere wenn diese Mittel nicht durch den Schalter selbst bereitgestellt werden, wird der Freigabezustand unabhängig vom Zustand des Schalters für den Benutzer erkennbar.

Gestaltet man den Schalter gemäß der Erfindug als irreversibel schaltbares Element aus, kann er zur Erstbenutzungserkennung verwendet werden.

Die vorliegende Erfindung kann beispielsweise angewendet werden in folgenden Formen von tragbaren Datenträgern: Chipkarten, Massenspeicherkarten, USB-Sticks, Ausweisdokumenten, wie beispielsweise Reispässen, die vorzugsweise buchförmig gestaltet sind, Wertdokumenten oder Banknoten.

Im Folgenden werden bevorzugte Ausführungsformen der Erfindung und Hintergrundinfomationen mit Bezug auf die Figuren beschrieben. Die Figuren zeigen im Einzelnen:
- Fig. 1: eine Ausgestaltung eines tragbaren Datenträgers mit einer über einem Freigabesensor angeordneten thermochromen Schicht;
- Fig. 2: eine Ausgestaltung eines tragbaren Datenträgers mit einer thermochromen Schicht und einem Lichtsensor; und
- Fig. 3: eine Ausgestaltung eines nicht erfindungsgemäßen, tragbaren Datenträgers mit einem irreversibel entfernbaren Element über einem Lichtsensor.

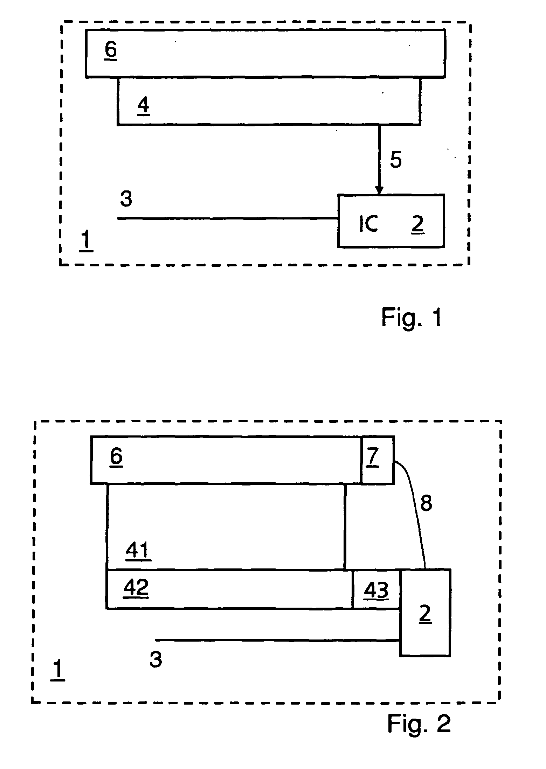

Fig. 1 zeigt eine funktionale Querschnittsansicht eines tragbaren Datenträgers 1, der einen Prozessor 2 und eine Antenne 3 als Kontaktloskommunikationsmittel umfasst. Ein Lichtsensor 4 erzeugt ein Freigabesignal 5, welches dem Prozessor 2 anzeigt, dass eine kontaktlose Kommunikation durchgeführt werden darf.

Zur Außenseite des tragbaren Datenträgers 1 hin, liegt eine thermochrome Schicht 6 über dem Lichtsensor 4. Die thermochrome Schicht 6, ist in ihrem Grundzustand für Licht mit einer ersten Wellenlänge intransparent. Zudem kann sie in dem Grundzustand eine für den Benutzer wahrnehmbare erste optische Information, beispielsweise die Farbe "rot", ein Stoppschild oder eine Symbol für einen geöffneten Schalter, darstellen.

Der Benutzer kann durch manuelle Erwärmung der thermochromen Schicht, insbesondere durch Auflegen eines Fingers oder durch Reiben, die Lichtdurchlässigkeit der thermochromen Schicht 6 zumindest für die erste Frequenz ändern. Die Änderung des durch die thermochrome Schicht 6 zu dem Lichtsensor 4 gelangenden Lichts wird detektiert. Das daraufhin erzeugte Freigabesignal 5 teilt dem Prozessor 2 nicht nur mit, dass Licht erkannt wurde, sondern auch dass der Benutzer bewusst einen Schalter betätigt hat, um eine kontaktlose Kommunikation zuzulassen.

In dem zweiten, erwärmten Zustand stellt die thermochrome Schicht 6 auch dem Benutzer eine geänderte optische Information dar, beispielsweise die Farbe grün, eine Sanduhr oder ein Symbol für einen geschlossenen Schalter. Die optische Information zeigt dem Benutzer also einen Schaltzustand der thermochromen Schicht 6 (als Schalter) an. Zudem kann sie angepaßt sein, dem Benutzer anzuzeigen dass und / oder wo er durch Interaktion eine Kommunikation des tragbaren Datenträgers 1 freigeben kann.

Damit die kontaktlose Kommunikation nicht nur solange möglich ist, wie der Benutzer die thermochrome Schicht beeinflusst, können Mittel zur Auf-rechterhaltung der Freigabe vorgesehen werden; dies fällt jedoch nicht unter die vorliegende Erfindung. Die Aufrechterhaltungsmittel sind insbesondere angepasst, die Freigabe aufrecht zu erhalten unabhängig von einem Vorliegen eines Kommunikationsfeldes und / oder für eine geeigneten Zeitraum. Der geeignete Zeitraum kann gewählt werden als maximale zu erwartende Kommunikationsdauer, optional zuzüglich einer zu erwartenden Zeit bis ein Kommunikationsfeld vorliegt bzw. der tragbare Datenträger vom Benutzer in dieses Feld geführt wird.

Aufrechterhaltungsmittel können in den Kontaktloskommunikationsmitteln bereitgestellt werden, beispielsweise durch Speichern der Freigabe als Information und Überwachen eines Timers (Zeitzähler). Nach dem Ablauf des Timers wird die Freigabeinformation gelöscht und somit die Kommunikationsbereitschaft beendet. Der Timer kann optional durch vorbestimmte Kommunikationsereignisse erneut gestartet werden. Sollte vor dem Ablauf des Timers eine Kommunikation begonnen worden sein, wird die Kommunikation bzw. entsprechende Transaktion auch abgeschlossen. Die Freigabe ist insofern eine Freigabe zum Aufnehmen einer kontaktlosen Kommunikation.

Abhängig von der Ausgestaltung des Schalters kann auch der Schalter als Aufrechterhaltungsmittel dienen. Ist der Schalter zwischen zwei dauerhaften Zuständen schaltbar (0 oder 1), sind keine weiteren Aufrechterhaltungsmittel nötig. Die thermochrome Schicht 6 kann ihren Schaltzustand in der Regel nur für eine zu kurze Zeit aufrechterhalten, daher sollten zusätzliche Aufrechterhaltungsmittel vorgesehen werden. Beispielsweise kann eine phosphoreszierende Substanz in dem Lichtsensor oder an einer anderen geeigneten Stelle enthalten sein. Geeignete Stellen sind beispielsweise eine an den Lichtsensor angrenzende Schicht oder eine nicht dargestellte transparente Zwischenschicht, die zwischen dem Lichtsensor 4 und der thermochromen Schicht 6 angeordnet ist.

Der Lichtsensor 4 kann als photovoltaisches Element ausgestaltet sein. Diese Form eines Sensors ist nicht nur kostengünstig, sondern auch leicht in den Aufbau des tragbaren Datenträgers integrierbar. Zudem ermöglicht das photovoltaische Element, Aufrechterhaltungsmittel gerade zur Überbrückung des ansonsten kritischen Zeitraums bereit zu stellen, in dem noch kein Kommunikationsfeld vorliegt, welches den tragbaren Datenträger 1 auch mit der zum Betrieb des Prozessors 2 nötigen Energie versorgt. Beispielsweise kann das Freigabesignal des photovoltaischen Elements die zur Speicherung der Freigabeinformation nötige Energie aufbringen. Ein Kondensator als Aufrechterhaltungsmittel ist ein einfaches Element und zudem bezüglich des zeitlichen Verhaltens gut einstellbar. Der Kondensator wird vom Freigabesignal geladen. Ein minimaler Ladungszustand des Kondensators wird vom Prozessor 2 als gespeicherte, positive Freigabeinformation gewertet. Die Eigenschaften oder die Anordnung des Kondensators werden so gewählt, dass er sich bis zum Ablauf des obigen geeigneten Zeitraums auf den minimalen Ladungszustand entlädt.

Der Lichtsensor 4 detektiert vorzugsweise das Tageslicht und /oder das künstliche Licht einer Raumbeleuchtung.

Fig. 2 zeigt, ebenfalls als funktionale Querschnittsansicht, eine weitere Variante eines tragbaren Datenträgers 1. Neben dem Prozessor 2, der Antenne 3, der thermochromen Schicht 6 und einem Lichtsensor 41, 42, 43 enthält der dargestellte tragbare Datenträger 1 ein Heizelement 7, das über eine Versorgungsleitung 8 von den Kontaktloskommunikationsmitteln 2, 3 mit Energie versorgt wird. Der Lichtsensor umfasst einen optionalen transparenten Bereich 41, einen Licht leitenden und / oder sammelnden Bereich 42 sowie den eigentlichen Sensor als lichtempfindliches Element 43. Das lichtempfindliche Element 43 kann in dem Prozessor 2 integriert sein.

Nach einer Benutzerinteraktion ist die thermochrome Schicht lichtdurchlässig und das Licht wird über den transparenten Bereich und den Lichtleiter 42 zu dem lichtempfindlichen Element 43 geleitet, welcher daraufhin das Freigabesignal erzeugt.

Als Aufrecherhaltungsmittel können phosphoriszierende Substanzen in zumindest einem der beiden das Licht weiter leitenden Bereiche 41, 42 dienen. Ferner kann das Heizelement 7 als Aufrechterhaltungsmittel dienen. Über die optionale Verbindungsleitung 8 erhält das Heizelement 7 Energie, die vorzugsweise aus dem Kommunikationsfeld entnommen ist. Es heizt die thermochrome Schicht 6 und erhält damit das Freigabesignal aufrecht. Alternativ oder ergänzend kann die Energie für das Heizelement 7 auch aus einem Energiespeicher, wie einer Batterie, des tragbaren Datenträgers 1 stammen. Wenn die thermochrome Schicht, wie bereits beschrieben, auch eine optische Information für den Benutzer enthält, kann somit zugleich auch die optische Information aufrechterhalten werden. Das Heizelement ist vorzugsweise als transparente Zwischenschicht zwischen der thermochromen Schicht 6 und dem Lichtsensor angeordnet.

In einer bevorzugten, nicht dargestellten Ausgestaltung sind die Antenne und der Lichtsensor in der gleichen Ebene angeordnet, wobei die Ebene parallel zur thermochromen Schicht liegt. So kann die Antenne 3 beispielsweise zusammen mit dem Lichtsensor und optional auch dem Prozessor auf einem Trägersubstrat als Inlay für die Herstellung des Datenträgers bereitgestellt werden.

Für kontaktlose tragbare Datenträger gibt es teilweise die Anforderung, dass der Datenträger, beispielsweise beim initialen Transport zum Benutzer, noch nicht verwendbar sein soll.

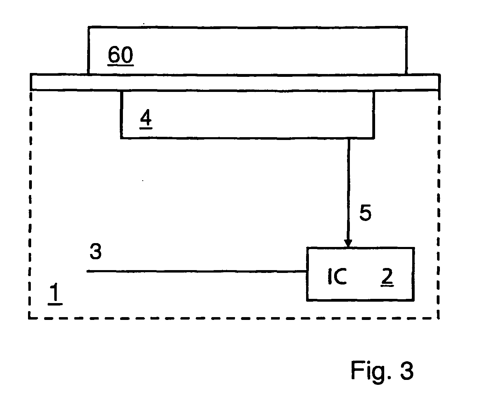

Gemäß den bisher beschriebenen Hintergundbeispielen, die nichr unter die vorliegende Erfindung fallen, ist der Schalter wiederholt schaltbar. Im Folgenden werden insbesondere mit Bezug auf Fig. 3 Ausgestaltungen der Erfindung beschrieben, in denen der Schalter irreversibel schaltbar ist. Der Benutzer erhält seinen tragbaren Datenträger und kann diesen durch den irreversiblen Schaltvorgang zur Benutzung freigeben. Damit wird dem Benutzer eine Erstbenutzungserkennung ermöglicht.

Fig. 3 zeigt - als nicht erfindungsgemäße Ausgestaltung - ein entfernbar auf der Außenseite des tragbaren Datenträgers 1 angeordnetes Schaltelement 60. Das Schaltelement 60 ist zumindest für eine Wellenlänge des Tageslichtes intransparent, beispielsweise ist es schwarz oder rot eingefärbt. Der weitere Aufbau des tragbaren Datenträgers 1 mit Lichtsensor 4, Freigabesignal 5, Antenne 3 und Prozessor 2 entspricht dem Aufbau gemäß Figur 1. Der Lichtsensor 4 ist angepasst das Freigabesignal zu erzeugen, wenn er anhand des eintreffenden Lichtes erkennt, dass das Schaltelement 60 vom tragbaren Datenträger entfernt worden ist.

Das Schaltelement 60 kann beispielsweise als Rubbelfeld oder abziehbarer Aufkleber ausgestaltet sein. Das irreversibel entfernbare Element bzw. der tragbare Datenträger sollte mit einem Manipulationserkennungsschutz ausgestattet sein, welcher einen Manipulationsversuch durch einmaliges Entfernen und wieder Aufbringen für den Benutzer erkennbar macht. Beispielsweise kann das entfernbare Element (auf seiner Rückseite) oder der tragbare Datenträger in dem Bereich, auf welchem das entfernbare Element aufgebracht ist, mit einem licht- und/oder sauerstoffempfindlichen Element versehen sein. Auf das Entfernen des Schaltelements 60 reagiert das Element auf den Sauerstoff bzw. das Licht mit einer irreversiblen Farbänderung. Vorzugweise ändert sich die Farbe nur so schnell, dass der Benutzer die Änderung gut wahrnehmen kann. D.h. die Änderung sollte weder derart langsam erfolgen, dass sie dem Benutzer nicht auffällt, noch derart schnell, dass der Benutzer sie nicht erkennen kann.

Alternativ zu einer Ausgestaltung des irreversiblen Schalters als entfernbares Element kann - in einer erfindungsgemäßen Ausgestaltung - auch der in Figur 1 gezeigte Schalter als irreversibler Schalter verwendet werden. Beispielsweise könnte die thermochrome Schicht 6 angepasst sein, einen Farbwechsel in Antwort auf Wärme nur ein einziges Mal zu ermöglichen. Ferner könnte diese Schicht auf Druck als Benutzerinteraktion mit einer irreversibel geänderten Lichtdurchlässigkeit reagieren. Die Änderung könnte in der Schicht durch eine chemische Reaktion hervorgerufen werden, beispielsweise durch die Vermengung zweier Komponenten nach einem Aufbrechen von Mikrokapseln oder das durch Verpressen zweier benachbarter, entsprechender Unterschichten.

## Patentansprüche

1. Tragbarer Datenträger (1) mit
einem Kontaktloskommunikationsmittel (2,3) zum Durchführen einer kontaktlosen Kommunikation, welches eine Antenne (3) und einen mit der Antenne (3) verbundenen Prozessor (2) umfasst;
einem Lichtsensor (4), der eintreffendes Licht detektiert;
wobei der tragbare Datenträger (1) eingerichtet ist, abhängig von dem detektiertem Licht eine kontaktlose Kommunikation mit Hilfe des Kontaktloskommunikationsmittels durchzuführen - wenn eintreffendes Licht detektiert wird - oder nicht durchzuführen - wenn kein eintreffendes Licht detektiert wird; und
einem durch einen Benutzer des tragbaren Datenträgers betätigbares Schaltelement (6), welches so ausgebildet ist, dass das Eintreffen von Licht auf dem Lichtsensor (4) von dem Schaltzustand des Schaltelements (6) abhängt,
**dadurch gekennzeichnet, dass**
das Schaltelement (6) im Innern des tragbaren Datenträgers (1) angeordnet ist, und
das Schaltelement (6) als irreversibel schaltbares Element ausgebildet ist, welches sich nach Betätigung durch den Benutzer irreversibel in seiner Lichtdurchlässigkeit verändert.

2. Tragbarer Datenträger (1) nach Anspruch 1, **dadurch gekennzeichnet, dass** das Schaltelement (6) zwischen dem Lichtsensor und der Außenseite des tragbaren Datenträgers angeordnet ist.

3. Tragbarer Datenträger (1) nach einem der vorhergehenden Ansprüche **dadurch gekennzeichnet, dass** der Lichtsensor (4) angepasst ist, ein Freigabesignal (5) zur Freigabe der kontaktlosen Kommunikation mit Hilfe der Kontaktloskommunikationsmittel (2,3) zu erzeugen.

4. Tragbarer Datenträger (1) nach einem der vorhergehenden Ansprüche, **gekennzeichnet durch** Mittel (2; 6; 41,42; 7,8) zur Aufrechterhaltung einer Freigabe der kontaktlosen Kommunikation.

5. Tragbarer Datenträger (1) nach Anspruch 4, **dadurch gekennzeichnet, dass** die Aufrechterhaltungsmittel (2; 6; 41,42; 7,8) angepasst sind, die Freigabe für einen vorbestimmten Zeitraum aufrecht zu erhalten.

6. Tragbarer Datenträger (1) nach Anspruch 4 oder 5, **dadurch gekennzeichnet, dass** der vorbestimmte Zeitraum gewählt ist als maximale zu erwartende Kommunikationsdauer, insbesondere zuzüglich einer zu erwartenden Zeit bis ein Kommunikationsfeld vorliegt.

7. Tragbarer Datenträger (1) nach einem der Ansprüche 4 bis 6, **dadurch gekennzeichnet, dass** Aufrechterhaltungsmittel in dem Lichtsensor (6) enthalten sind.

8. Tragbarer Datenträger (1) nach einem der Ansprüche 4 bis 7, **dadurch gekennzeichnet, dass** Aufrechterhaltungsmittel in dem Kommunikationsmittel (2, 3) enthalten sind.

9. Tragbarer Datenträger (1) nach einem der vorhergehenden Ansprüche **dadurch gekennzeichnet, dass** der Lichtsensor ein lichtleitendes Element (41) und ein lichtempfindliches Element (42) umfasst.

10. Tragbarer Datenträger (1) nach einem der vorhergehenden Ansprüche, **gekennzeichnet durch** Mittel zur Anzeige eines Freigabezustandes für den Benutzer.

11. Verwendung eines tragbaren Datenträgers (1) nach einem der vorhergehenden Ansprüche **dadurch gekennzeichnet, dass** der Benutzer den tragbaren Datenträger durch den irreversiblen Schaltvorgang zur Benutzung freigibt und damit dem Benutzer eine Erstbenutzungserkennung ermöglicht wird.

## Claims

1. A portable data carrier (1), comprising:
contactless-communication means (2,3) for performing a contactless communication, the means (2, 3) comprising an antenna (3) and a processor (2) connected to the antenna (3);
a light sensor (4) detecting incident light;
wherein the portable data carrier (1) is configured for performing, depending on the detected light, a contactless communication supported by the contactless-communication means - if incident light is detected -, or not to perform the contactless communication - if no incident light is detected; and
a switching element (6) operable by a user of the portable data carrier, the switching element (6) being configured such that the incidence of light on the light sensor (4) depends on the switching state of the switching element (6),
**characterised in that**
the switching element (6) is arranged internally within the portable data carrier (1), and
the switching element (6) is configured as an irreversibly switchable element, the light transmittance of which changes irreversibly upon operation by the user.

2. The portable data carrier (1) according to claim 1, **characterised in that** the switching element (6) is arranged between the light sensor and the outer face of the portable data carrier.

3. The portable data carrier (1) according to any one of the preceding claims, **characterised in that** the light sensor (4) is adapted for generating an enablement signal (5) for enabling the contactless communication supported by the contactless-communication means (2,3).

4. The portable data carrier (1) according to any one of the preceding claims, **characterised by** means (2; 6; 41,42; 7,8) for maintaining an enablement of the contactless communication.

5. The portable data carrier (1) according to claim 4, **characterised in that** the maintaining means (2; 6; 41,42; 7,8) are adapted for maintaining the enablement for a predetermined duration.

6. The portable data carrier (1) according to claim 4 or claim 5, **characterised in that** the predetermined duration is selected as the maximum expected duration of the communication, in particular in addition to an expected time until a communication field is present.

7. The portable data carrier (1) according to any one of claims 4 to 6, **characterised in that** maintaining means are contained in the light sensor (6).

8. The portable data carrier (1) according to any one of claims 4 to 7, **characterised in that** maintaining means are contained in the communication means (2,3).

9. The portable data carrier (1) according to any one of the preceding claims, **characterised in that** the light sensor comprises a light transmitting element (41) and a light sensitive element (42).

10. The portable data carrier (1) according to any one of the preceding claims, **characterised by** means for displaying an enablement state to the user.

11. A use of a portable data carrier (1) according to any one of the preceding claims, **characterized in that** the user enables the portable data carrier by the irreversible switching operation for use, such that a detection of first use is facilitated for the user.

## Revendications

1. Support de données portatif (1) comprenant
un moyen de communication sans contact (2, 3) pour réaliser une communication sans contact qui comprend une antenne (3) et un processeur (2) relié à l'antenne (3) ;
un capteur lumineux (4) qui détecte de la lumière entrante ;
dans lequel le support de données portatif (1) est installé pour effectuer une communication sans contact à l'aide du moyen de communication sans contact dépendamment de la lumière détectée lorsque de la lumière entrante est détectée ou pour ne pas l'effectuer lorsque aucune lumière entrante n'est détectée ; et
un élément de commutation (6) pouvant être actionné par un utilisateur du support de données portatif qui est réalisé de sorte que l'arrivée de lumière sur le capteur lumineux (4) dépend de l'état de commutation de l'élément de commutation (6),
**caractérisé en ce que**
l'élément de commutation (6) est disposé au sein du support de données portatif (1) et
l'élément de commutation (6) est réalisé en tant qu'élément pouvant être commuté de manière irréversible qui se modifie de manière irréversible dans sa perméabilité lumineuse après actionnement par l'utilisateur.

2. Support de données portatif (1) selon la revendication 1, **caractérisé en ce que** l'élément de commutation (6) est disposé entre le capteur lumineux et le côté externe du support de données portatif.

3. Support de données portatif (1) selon l'une quelconque des revendications précédentes, **caractérisé en ce que** le capteur lumineux (4) est adapté à générer un signal de déblocage (5) pour débloquer la communication sans contact à l'aide du moyen de communication sans contact (2, 3).

4. Support de données portatif (1) selon l'une quelconque des revendications précédentes, **caractérisé par** des moyens (2 ; 6 ; 41, 42 ; 7, 8) pour le maintien d'un déblocage de la communication sans contact.

5. Support de données portatif (1) selon la revendication 4, **caractérisé en ce que** les moyens de maintien (2 ; 6 ; 41, 42 ; 7, 8) sont adaptés à maintenir le déblocage pendant une période prédéterminée.

6. Support de données portatif (1) selon la revendication 4 ou 5, **caractérisé en ce que** la période prédéterminée est choisie en tant que durée de communication maximale à attendre, notamment majorée d'un temps à attendre jusqu'à présence d'un champ de communication.

7. Support de données portatif (1) selon l'une quelconque des revendications 4 à 6, **caractérisé en ce que** les moyens de maintien sont contenus dans le capteur lumineux (6).

8. Support de données portatif (1) selon l'une quelconque des revendications 4 à 7, **caractérisé en ce que** les moyens de maintien sont contenus dans le moyen de communication (2, 3).

9. Support de données portatif (1) selon l'une quelconque des revendications précédentes, **caractérisé en ce que** le capteur lumineux comprend un élément conducteur de lumière (41) et un élément sensible à la lumière (42).

10. Support de données portatif (1) selon l'une quelconque des revendications précédentes, **caractérisé par** des moyens d'affichage d'un état de déblocage pour l'utilisateur.

11. Utilisation d'un support de données portatif (1) selon l'une quelconque des revendications précédentes, **caractérisée en ce que** l'utilisateur débloque pour l'utilisation le support de données portatif par le processus de commutation irréversible et il est ainsi permis à l'utilisateur une reconnaissance de première utilisation.
